Europäisches Patentamt

European Patent Office

Office européen des brevets

(19)

(11) Publication number: **0 120 009**
**B1**

# EUROPEAN PATENT SPECIFICATION

(45) Date of publication of patent specification: **30.11.88**

(21) Application number: **83900088.2**

(22) Date of filing: **30.09.82**

(86) International application number:
**PCT/US82/01378**

(87) International publication number:
**WO 84/01347 12.04.84 Gazette 84/10**

(51) Int. Cl.⁴: **B 64 D 27/00, B 64 C 23/04,**
**B 64 C 1/38**

(54) SHOCK INDUCING POD FOR CAUSING FLOW SEPARATION.

(43) Date of publication of application:
**03.10.84 Bulletin 84/40**

(45) Publication of the grant of the patent:
**30.11.88 Bulletin 88/48**

(84) Designated Contracting States:
**DE FR GB NL**

(56) References cited:
**GB-A- 664 288**
**US-A-2 739 770**
**US-A-2 800 291**
**US-A-2 885 161**
**US-A-2 984 439**
**US-A-3 199 813**
**US-A-3 288 399**
**US-A-3 327 965**
**US-A-3 370 810**
**US-A-3 744 745**
**US-A-3 968 946**
**US-A-4 314 681**
**US-A-4 334 658**
**US-A-4 354 648**

(73) Proprietor: **The Boeing Company**
**P.O. Box 3707**
**Seattle Washington 98124 (US)**

(72) Inventor: **VANDERHOEVEN, Antonius,**
**Johannes**
**12617 Southeast 61st Street**
**Bellevue, WA 98006 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

The present invention relates to a swept-wing aircraft according to the preamble of claim 1.

Such a wing is known e.g. from US-A-2 885 161 and US-A-4 314 681.

The present invention provides a highly effective solution for the problem of pitch up at high angles of attack.

This highly effective solution is formed by a swept-wing aircraft according to the characterizing part of claim 1.

This invention relates to correcting undesirable flight characteristics of an aircraft. More particularly, this invention relates to an aerodynamic device used to remedy a nonlinear, unstable high Mach number stall characteristic of a sweptwing jet transport commonly called "pitch up".

As known to those skilled in the art, art flowing over the upper surface of an airplane wing separates from the wing surface when the wing reaches a given angle of attack at sufficiently high airspeed, resulting in a loss of lift or a condition known as stall. Moreover, with a swept-wing airplane operating at high Mach numbers, e.g., above approximately 0,6, as the angle of attack of the wing is increased, air flowing over the upper surface of the outboard wing separates from the wing before air flowing over the upper surface of the inboard wing separates; thus, the outboard section of the wing effectively stalls at a lower angle of attack than the inboard section.

Two factors contribute to the earlier separation of airflow over the outboard wing. The first factor is spanwise airflow over the wing due to the sweep of the wing. The spanwise airflow augments the adverse pressure gradient experienced by air flowing over the outboard wing's upper surface, thereby contributing to earlier separation of airflow from the outboard wing's upper surface. A second factor causing earlier separation of airflow over the outboard wing is shock-induced separation. As air flowing over the outboard wing's upper surface reaches supersonic velocity, a shock is formed, and it is formed at lower airspeeds than on the inboard wing. The shock takes energy out of the airflow behind it, causing the airflow to tend to separate from the wing's surface. Thus, as the angle of attack of a swept-wing is increased when the airplane is operating at high Mach numbers, the outboard wing loses lift before the inboard wing.

On present-day swept-wing jet transports, the pitch axis of the airplane extends laterally through the center of gravity of the airplane and is generally located at approximately 25% of the mean aerodynamic chord of the wing. The centers of lift of the inboard and outboard wings are generally located rearward of the pitch axis; thus, the lifting forces generated by the inboard and outboard wings create a pitching moment that tends to force the nose of the airplane downwardly. In a stable flight condition, the pitching moment created by the lift of the wings is counteracted by a downward force exerted by the airplane's horizontal stabilizer. When the angle of attack of the wing is increased to the point where separation occurs on the outboard wing causing a decrease in the lift component, a resultant tendency toward pitch up occurs since the lift component of the inboard wing is still linearly increasing with increasing angle of attack and the downward force of the horizontal stabilizer increases proportionally with increasing inboard wing lift. The unstable character of this phenomenon is dangerous and made the more so due to unpredictable factors that contribute, such as local atmospheric conditions including local ambient wind patterns, e.g., gust upsets. Because of the abruptness of the effect at certain Mach numbers and the element of unpredictability, combined with the associated increase in load factor and the increase in buffet load at high Mach numbers and high angles of attack, various aerodynamic solutions to the problem have been proposed that are not dependent upon pilot response.

Two basic approaches have been used attempting to solve the high speed pitch up problem. In one approach, devices have been employed to enhance the outboard wing lifting capability. These include fences on the outboard wing or midwing (US-A-2 885 161), wing twist, profile camber changes (generally known), leading edge contour changes (US-A-3 370 810 and 2 739 770), wing planform changes (saw-tooth, gloves, etc.) and vortex generators located at the midspan of a wing (generally known). However, none of these have completely eliminated the pitch up problem. Most have increased the coefficient of outboard wing lift as a function of angle of attack but have not eliminated the pitch up loop nor changed its magnitude.

For example, midspan vortex generators (US-A-2 800 291 and 4 354 648) provide a solution using this approach in that they were found to correct flow problems in the midspan area and prevent spanwise flow from affecting the outboard wing up to a certain angle of attack, thus helping airplane stability and extending the linear part of the pitching moment curve. However, this contribution to extension of the stable part of the pitching moment curve occurs at Mach numbers greater than the cruise Mach number of present day jet transports. In all cases, the solution with a vortex generator is likely to be very dependent upon the configuration of the wing or local flow condition and shock position on the outboard wing. Thus, identical placement of vortex generators on wings having different configurations are unlikely to achieve the same results.

The second basis approach used in attempting to solve the high speed pitch up problem is the reduction of inboard wing lift coincidentally with the loss of lift on the outboard wing. Efforts concentrating on this approach are relatively recent. One prior art device (as disclosed in US-A-4 334 658) using this approach is an extendable/retractable discontinuity can be a stall strip or a leading edge spoiler progressively extended with increasing Mach number and angle of attack. This type of device has been found to be effective in correcting high speed pitch up, however, it has several drawbacks. One is a sudden leading edge separation at high Mach numbers and angles of attack resulting in a very rapid rise in heavy tail buffet loading. Also, a pitching moment that is associated with the leading edge separation has been found to be undesirable from the standpoint of controlling the airplane. Additionally, since this device is a critical flight control component it must have a redundant mechanical system to ensure operability in the event of failure of the main system, thus resulting in an increase in mechanical complexity and weight. Further drawbacks include the necessity for its attachment to primary aircraft structure, anti-icing considerations, and increased drag.

Another prior art device (GB-A-644 288) following the second approach is a body vane that is positioned on the side of the fuselage close to the wing leading edge. Since a vane in this position is within an area of very high airflow speed relative to free stream velocity, the vane has to be aligned with the airflow during cruise in order to minimize its drag effect and also must be attached to primary aircraft structure due to the forces imposed upon it. Since the vane may require a different setting for climbout, it would require a drive mechanism to control the setting of the vane. Furthermore, establishing the correct aerodynamic position from wind tunnel testing is unlikely, and easy variation of position in flight may be difficult to attain because of the required support structure.

The present invention comprises in essense an aerodynamic-type device requiring no moving parts and inherently compensates for the loss of lift of the outboard wing. Broadly viewed, such compensation is achieved by means of aerodynamically inducing a shock over the inboard wing at the same airspeed and predetermined angle of attack as that causing the outboard wing loss of lift. The shock causes a localized separation of the air flowing over the upper surface of the inboard portion of the wing, thereby preventing the objectionable unstable pitching moment curve heretofore experienced.

For a swept-wing aircraft that has a strut-mounted engine on each wing, a preferred form of the invention is a protuberance or pod that is faired into the intersection of the upper surface of the wing and the inboard side of the strut. The pod, with its forward end located forwardly of the leading edge of the wing, extends rearwardly to a location adjacent the rear edge of the portion of the strut that lies above the upper surface of the wing. In this embodiment of the invention, the point of greatest curvature of the pod is positioned to form or intensify a shock that originates at the intersection of the leading edge of the wing and the inboard side of the engine mounting strut. An additional useful function of this shock forming pod in its preferred embodiment is provided by having the side of the pod that abuts the strut extend upwardly above the strut as a fence that acts as a vortex generator at angles of attack lower than the predetermined angle at which "pitch up" would occur. The resultant vortex action adds energy to air flowing over the strut and thereby decreases the drag of the pod and also minimizes the decrease in the maximum coefficient of lift of the aircraft wing.

A better understanding of the present invention can be derived by reading the ensuing specification in conjunction with the accompanying drawings wherein:

FIGURE 1 is a perspective side view of an airplane showing the various force components operating on the lifting surfaces of the airplane;

FIGURE 2 is a graph showing the relationship between the angle of attack and the pitching movement of a wing;

FIGURE 3 is a plan view of a wing of an aircraft having a single strut-mounted jet engine suspended therefrom and showing the origination of a shock wave from the intersection of the strut and the leading edge of the wing;

FIGURE 4 is a perspective view of the pod mounted against the inboard side of an engine mounting strut;

FIGURE 5 is a side elevation view of the pod taken along viewing line 5-5 of FIGURE 4;

FIGURE 6 is a front elevational view of the pod taken along viewing line 6-6 of FIGURE 5;

FIGURE 7 is a plan view of the wing shown in FIGURE 3 having a pod installed thereon;

FIGURE 8 is a graph showing the relationship between horizontal stabilizer environment buffet energy and angle of attack;

FIGURE 9 is a graph plotting the level of flow separation at spanwise locations on a wing; and,

FIGURE 10 is a plan view of an aircraft wing having two strut-mounted jet engines suspended therefrom and showing alternative locations for the pods.

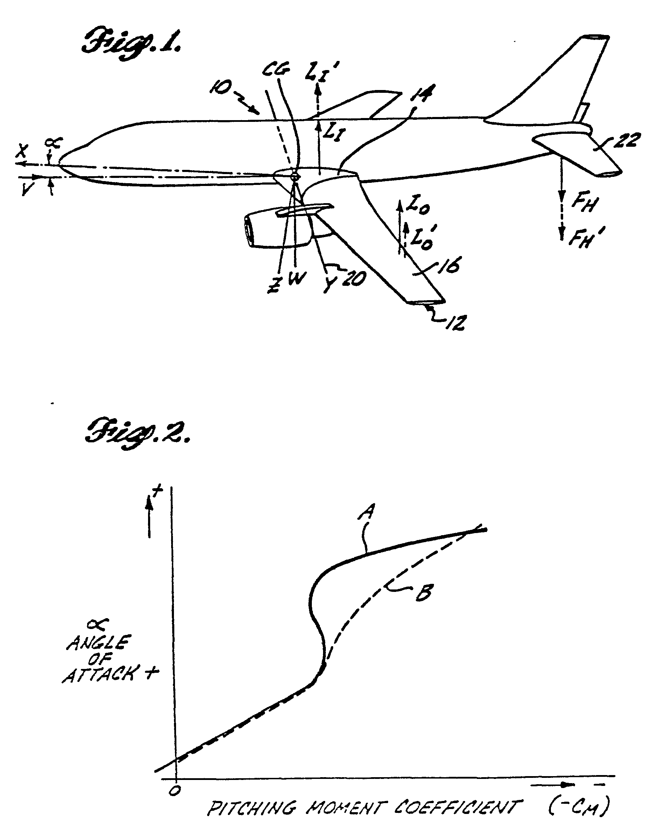

FIGURE 1 is a schematic drawing of a conventional aircraft 10 having swept wings 12. As an aid in understanding the following discussion, a Cartesian coordinate system having x, y, and z axes is shown with the origin of the coordinate system at the center of gravity (CG) of aircraft 10. The x-axis lies along the longitudinal axis of the aircraft 10; the y-axis extends laterally through the aircraft 10; and, the z-axis extends vertically through the aircraft 10. FIGURE 1 also illustrates the direction and relative magnitude of force vectors acting on the aircraft 10 during a stable flight mode. Arrow W indicates the weight of the aircraft 10 acting through the center of gravity of the aircraft. The upwardly directed arrow $L_i$ represents lift generated by the inboard portion 14 of wing 12, and the upwardly directed arrow $L_o$ represents lift generated by the outboard portion 16 of the wing at a specific Mach number and a certain angle of attack of the aircraft 10. The angle of attack is the angle between a free-stream velocity vector V and the x-axis of the aircraft 10.

In a conventional swept-wing aircraft 10, the pitching axis 20 (herein the y-axis), i.e., the axis about which the aircraft will rotate to go into a nose-up or a nose-down condition, passes through the CG of the aircraft which varies in location from 10 to 35% of the mean aerodynamic chord of wing 12. Since the centers of lift of inboard and outboard portions 14 and 16 of wing 12 typically combine to produce a nose-down pitching moment about pitch axis 20, a downward force, represented by arrow $F_H$, must be generated by the horizontal stabilizer 22 for the aircraft to maintain a stable flight condition.

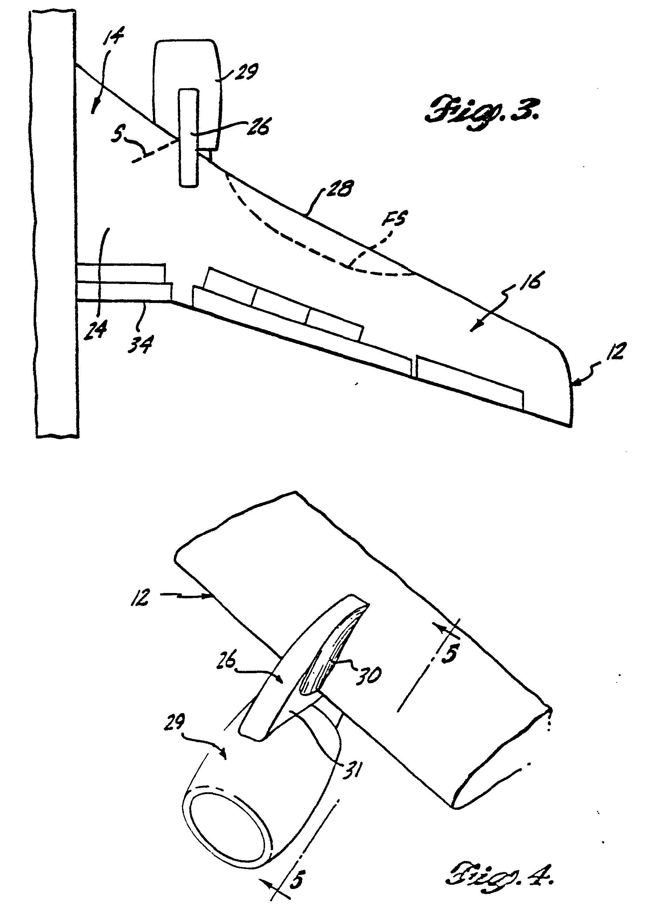

As known to those skilled in the art, when the angle of attack of aircraft 10 is increased at high Mach numbers, i.e., above approximately 0.6, the lift component $L_O$ does not increase in the same fashion as $L_I$. The lift of the outboard wing 16 increases up to a threshold angle of attack and then begins to decrease, while the lift of the inboard wing 14 continues to increase. The downward force component $F_H$ also increases as the lift of the inboard wing 14 increases. Thus, above the threshold angle of attack, the inboard wing lift component has increased in magnitude (represented by dashed arrow $L'_I$), the outboard wing lift component has decreased in magnitude (represented by dashed arow $L'_O$), and the downward force component at the horizontal stabilizer has increased in magnitude (represented by dashed arrow $F'_H$). After the threshold angle of attack has been passed, the summation of forces about pitch axs 20 results in an unstable increase in the pitching moment about the pitch axis, causing the aircraft to go into a nose-up attitude. This unstable increase in the pitching moment is called "pitch up." A graphical representation of the "pitch up" phenomenon is shown in FIGURE 2 by curve A, wherein the pitching moment coefficient $(C_M)$ is plotted as a function of the angle of attack $(a)$. The relationship between the pitching moment and pitching moment coefficient is expressed by the equation:

$$\text{pitching moment} = C_M \ q \ S \ \overline{C};$$

where

$C_M$ = pitching moment coefficient;
$q = 1/2 \ p \ v^2$;
$S$ = reference wing area (vertical projection of the area bounded by the wing with the leading edge and trailing edge of the wing extended inwardly to the centerline of the fuselage); and,
$\overline{C}$ = mean aerodynamic chord.

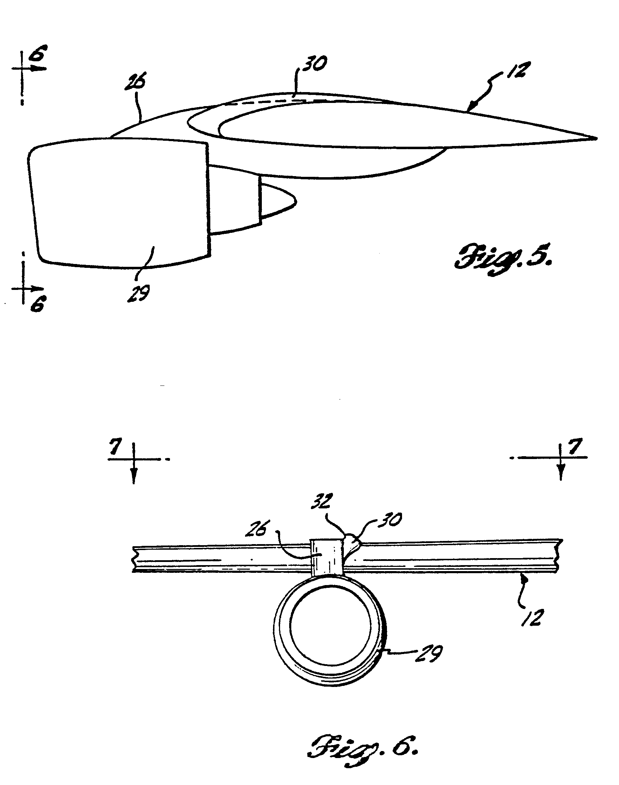

The unstable pitch up condition occurs in curve A in the region where $C_M$ becomes more positive as $a$ increases. The inventor has discovered that by forming a shock S, as depicted in FIGURE 3, in the air flowing over upper surface 24 of inboard wing 14 at the same aircraft speed and angle of attack at which flow separation (represented by dashed line FS in FIGURE 3) occurs for outboard wing 16, the $a$ vs. $C_M$ relationship can be linearized as represented by curve B in FIGURE 2, resulting in a stable pitching moment curve. The formation of shock S causes localized separation of air flowing over the upper surface 24 of inboard wing 14, resulting in a decrease in $L_I$ at the same time that $L_O$ decreases.

The present invention uses the placement of a fixed protuberance at a predetermined location on an aircraft for formation of shock S.

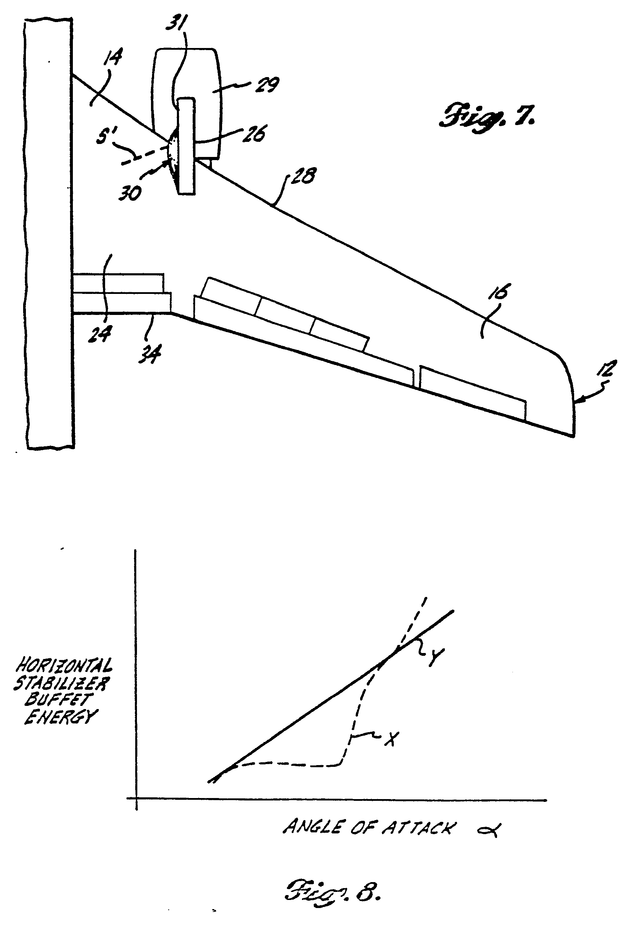

For a swept-wing aircraft having a single jet engine 29 suspended from each wing 12 by a strut 26, a preferred embodiment of the present invention is comprised of a pod 30 that is faired into the inboard intersection of strut 26 and wing 12 (FIGURES 4 through 7). The pod is contoured to form a shock wave (s' in FIGURE 7) that originates from the intersection of the leading edge 28 of wing 12 and the inboard side 31 of strut 26. As known to those skilled in the art, the final contour of pod 30 is established by a two-step process. The initial, general contour of pod 30 is generated by a computation process, while the precise, final contour of the pod is determined by physical modeling and wind tunnel testing. In this embodiment, pod 30 comprises an aerodynamically shaped protuberance tapered at its forward and aft ends (FIGURES 5 and 7) and having a cross section, taken along a lateral, vertical plane that approximates a quadrant of a circle. The forward end of pod 30 is located forward of leading edge 28, while the aft end of the pod terminates at a point adjacent a rear edge of the portion of strut 26 on the upper surface of wing 12 (FIGURE 7).

As mentioned previously, pod 30 operates to decrease the pitching moment of an aircraft 10 by causing air flowing over inboard portion 14 of wing 12 to separate from the wing's upper surface as the angle attack of the wing is increased at high Mach numbers. The airflow separation associated with pod 30 originates at the trailing edge 34 of wing 12 (FIGURE 7). The point of separation moves forward in the chordwise direction as the angle of attack of the wing or Mach number is increased. Since the separation of airflow from the upper surface of inboard portion 14 caused by pod 30 is a gradual process, an abrupt leading edge separation associated with prior devices is avoided so that greater control over the aircraft can be maintained.

Another benefit is associated with the gradual flow separation caused by pod 30. Most of the high speed stall patterns associated with an inboard portion 14 of a wing 12 induce an abrupt increase in buffet energy on the horizontal stabilizer environment of the aircraft 10 due to the separated turbulent flow coming off the wing. The increase in buffet energy can be of a magnitude and/or frequency that imposes undesirable loads on the horizontal stabilizer structure or, in an extreme case, setting an angle of attack limit on the aircraft. The relationship between horizontal stabilizer environment buffet energy and angle of attack is illustrated in FIGURE 8. The horizontal stabilizer environment buffet energy curve associated with a wing that does not use a pod 30 is represented by curve X. The buffet energy curve associated with a wing using a pod 30 is represented by curve Y. As shown in FIGURE 8, the use of pod 30 changes the buffet energy spectrum in a favorable way. Because airflow separation over the inboard portion 14 of the wing 12 starts gradually at the trailing edge 34 of the wing and progresses forward as the angle of attack is increased, horizontal stabilizer environment buffet energy increases linearly with increasing angle of attack. If an angle of attack limit is set for the wing 12 to limit buffet energy to a specified level, the requirement of not exceeding the limit of the angle of attack can be met by precisely controlling the airplane angle of attack in a maneuver and going up the buffet energy slope until the angle of attack limit is reached. Such control is now possible because the $\alpha$ vs $C_M$ relationship is nearly linear with the use of pod 30.

As shown in FIGURE 6, outboard side 32 of pod 30 that is in abutment with strut 26 extends upwardly beyond the upper surface of the strut. Outboard side 32 has a substantially planar, vertical configuration to make the upper, exposed portion of pod 30 act as a vortex generator for air flowing rearwardly over the upper surface of strut 26. In tests conducted by the inventor, when pod 30 is installed along the intersection of strut 26 and wing 12, the pod does not cause the amount of drag expected based upon its frontal and surface area. It is thought that the formation of a vortex by pod 30 decreases the effective drag caused by the pod. It has also been found that the presence of pod 30 has a minimal effect upon the maximum coefficient of lift ($C_{Lmax}$) of wing 12. The generation of a vortex by pod 30 is also thought to be the reason for this minimal effect on $C_{Lmax}$.

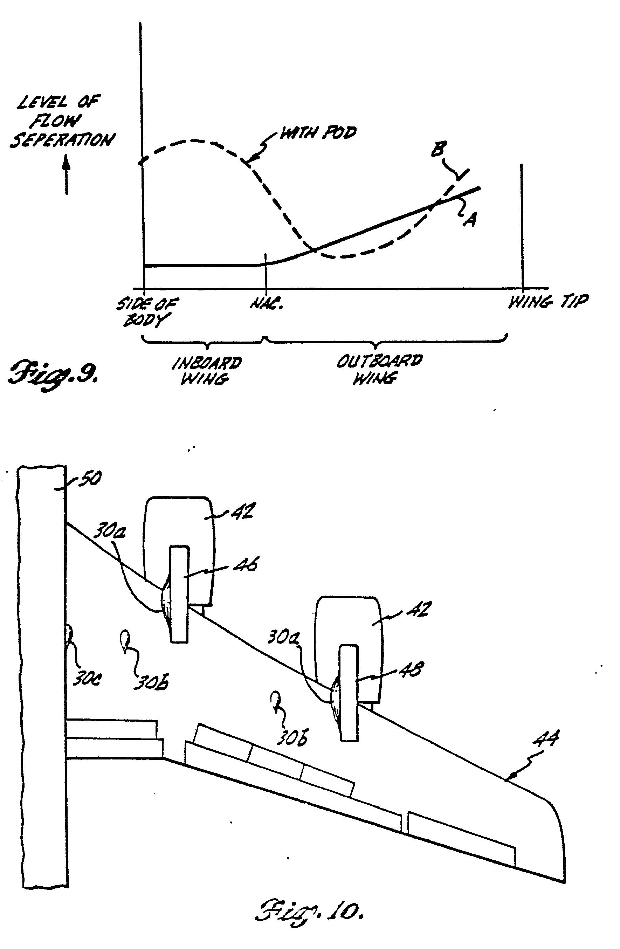

Another phenomenon observed for a wing 12 having an installed pod 30 is an interdependency between flow separation over the inboard and outboard wing 14 and 16. FIGURE 9 shows a graph plotting the level of separation (established by measuring trailing edge pressures) at spanwise locations on a wing 12 for a specified Mach number and certain angle of attack. As illustrated by curve A (solid line), the level of separation for a wing 12 without pod 30 increases in the outboard direction past the engine nacelle. On a wing 12 with a pod 30 (curve B), the level of separation for the inboard wing 14 is greater than without the pod, as would be expected. However, on the outboard wing 16, the level of separation is lower than without the pod 30. Thus, an interdependency between flow separation on the inboard and outboard wings 14 and 16 appears to exist.

As shown in FIGURE 10, another embodiment of the invention for a swept-wing aircraft having two engines 42 suspended from each wing 44 includes a pod located on the inboard side of the inboard nacelle strut 46 and another pod located on the inboard side of the outboard nacelle strut 48 as indicated by the reference numeral 30a. The size and contour of pods 30a are tailored to achieve the desired flow separation for the particular aerodynamic characteristic of the wing on which the pods are mounted. Another location for positioning pods on a wing 44 having two engines 42 is on the upper surface of the wing as noted by the pods having the reference numeral 30b. The pods located on the upper wing surface would have a tear-drop shape when viewed from above. The larger diameter end of the pod is oriented in the forward direction. In another embodiment of the invention, a pod 30c could be placed on the fuselage 50 of an aircraft at a position above the wing 44. Here again, the pod 30c would have a tear-drop shape when viewed in a horizontal direction. The function of these alternate embodiments is the same in that they are used to form a shock in the air flowing over the upper surface of the inboard portion of the wing 44 and thereby cause a localized separation of airflow on the upper surface.

**Claims**

1. A swept-wing aircraft (10), having a wing (12) with inboard and outboard sections (14, 16 respectively) and a propulsion unit (29) suspended intermediate the length of the wing by a supporting strut (20, 26, 46, 48) attached to the wing (12) and extending chordwise thereof, said strut having an elongated upper portion with sides rising above the wing's upper surface and extending aft from the wing's leading edge (28) with diminishing height above the wing to a rear terminus, means to reduce an abrupt, unstable pitching moment due to loss of outboard wing section lift (20) occuring with increasing wing angle of attack ($\alpha$) above a predetermined value at a predetermined related airspeed (V), characterized in that said means comprise an elongated pod (30) extending chordwise as a protuberance from the wing's upper surface at a location alongside the strut's upper portion on the inboard side (31) of that strut, said pod (30) being configured to form a shock in the flow of air over the upper surface (24) of the inboard section (14) of the wing airspeed (V) and angle of attack ($\alpha$), counteracting said loss of outboard wing section lift (LO) thereby to reduce said unstable pitching moment change.

2. A swept-wing aircraft of claim 1, wherein said pod protuberance (30) is faired into said upper surface of the wing (12) and into the adjacent side of the strut's upper portion along the length of the chordwise extending junction between them.

3. A swept-wing aircraft of claim 1 or 2 wherein the pod (30) projects forwardly from the leading edge (28) of the wing and extends rearwardly therefrom to a terminus substantially at the rear terminus of said strut upper portion, said protuberance being contoured to form a shock originating at the intersection of the leading edge (28) of the wing and the inboard side of said strut upper portion.

4. A swept-wing aircraft of claim 1 or 2, wherein the pod (30) projects forwardly from the leading edge (28) of the wing and extends rearwardly therefrom to a terminus substantially at the rear terminus of said strut's upper portion, said protuberance being contoured to form a shock originating substantially at the leading edge (28) of the wing adjacent the inboard side of said strut's upper portion, and further wherein the pod protuberance (30) rises from the upper surface of the wing to a level above said strut's upper portion so as to form a vortex generating fence which minimizes pod drag and further minimizes a decrease in coefficient of lift of the wing.

5. A swept-wing aircraft of claim 1, wherein said pod protuberance (30) has a tear-drop shape when viewed in planform, with a larger radius end of said tear-drop shape oriented toward said leading edge of said wing.

6. A swept-wing aircraft of claim 1, wherein said pod protuberance (30) is positioned between 10% and 40% of the chord of said wing.

**Patentansprüche**

1. Flugzeug (10) mit gepfeiltem Flügel, das einen Flügel (12) mit Innenbord- und Außenbordabschnitt (14 bzw. 16) hat, und eine Antriebseinheit (29), die im Zwischenbereich der Länge des Flügels mittels einer Haltestrebe (20, 26, 46, 48), welche an dem Flügel (12) angebracht ist und sich profilsehnenweise desselben erstreckt, aufgehängt ist, wobei diese Strebe einen langgestreckten oberen Teil mit Seiten hat, die sich über die obere Fläche des Flügels erheben und sich von der Anströmkante (28) des Flügels mit abnehmender Höhe über dem Flügel zu einem rückwärtigen Ende nach hinten erstrecken, eine Einrichtung zum Vermindern eines abrupten, instabilen Stampfmoments aufgrund eines Verlusts von Außenbordflügelabschnittsauftrieb (Lo), der mit zunehmendem Flügelanstellwinkel (α) oberhalb eines vorbestimmten Werts bei einer vorbestimmten, damit in Beziehung stehenden Luftgeschwindigkeit (V) auftritt, dadurch gekennzeichnet, daß diese Einrichtung einen langgestreckten Pod (30) umfaßt, der sich profilsehnenweise als eine Protuberanz von der oberen Oberfläche des Flügels an einer Stelle längsseits des oberen eine Teils der Strebe auf der Innenbordseite (31) dieser Strebe erstreckt, wobei der Pod (30) so konfiguriert ist, daß er einen Schock in der Strömung der Luft über der oberen Oberfläche (24) des Innenbordabschnitts (14) des Flügels bei der erwähnten Luftgeschwindigkeit (V) und dem erwähnten Anstellwinkel (α) bildet, welcher dem Verlust von Außenbordflügelabschnittsauftrieb (Lo) entgegenwirkt, so da8 dadurch die erwähnte instabile Stampfmomentänderung vermindert wird.

2. Flugzeug mit gepfeiltem Flügel nach Anspruch 1, dadurch gekennzeichnet, daß die erwähnte Podprotuberanz (30) aerodynamisch günstig in die obere Oberfläche des Flügels (12) und in die benachbarte Seite des oberen Teils der Strebe längs der Länge der sich profilsehnenweise erstreckenden Verbindung zwischen ihnen verkleidet ist.

3. Flugzeug mit gepfeiltem Flügel nach Anspruch 1 oder 2, dadurch gekennzeichnet, daß der Pod (30) vorwärts von der Anströmkante (28) des Flügels vorsteht und sich hiervon nach rückwärts zu einem Ende im wesentlichen an dem rückwärtigen Ende des oberen Teils der Strebe erstreckt, wobei diese Protuberanz so konturiert ist, daß ein Schock gebildet wird, der an der Stoßstelle der Anströmkante (28) des Flügels und der Innenbordseite des oberen Teils der Strebe beginnt.

4. Flugzeug mit gepfeiltem Flügel nach Anspruch 1 oder 2, dadurch gekennzeichnet, daß der Pod (30) nach vorwärts von der Anströmkante (28) des Flügels vorsteht und sich hiervon nach rückwärts zu einem Ende im wesentlichen an dem rückwärtigen Ende des oberen Teils der Strebe erstreckt, wobei diese Protuberanz so kontuiert ist, daß ein Schock gebildet wird, welcher im wesentlichen an der Anströmkante (28) des Flügels benachbart der Innenbordseite des oberen Teil der Strebe beginnt, und daß weiter die Podprotuberanz (30) von der oberen Oberfläche des Flügels zu einem Niveau oberhalb des oberen Teils der Strebe ansteigt, so daß ein wirbelerzeugender Zaun gebildet wird, welcher den Podströmungswiderstand minimalisiert und weiter eine Abnahme im Koeffizienten des Auftriebs des Flügels minimalisiert.

5. Flugzeug mit gepfeiltem Flügel nach Anspruch 1, dadurch gekennzeichnet, daß die Podprotuberanz (30), gesehen in der Aufsichtsform, eine Tränentropfenform hat, wobei das Ende mit größerem Radius der Tränentropfenform nach der Anströmkante des Flügels zu ausgerichtet ist.

6. Flugzeug mit gepfeiltem Flügel nach Anspruch 1, dadurch gekennzeichnet, daß die Podprotuberanz (30) zwischen 10 % und 40 % der Profilsehne des Flügels positioniert ist.

**Revendications**

1. Aéronef ( l0) à ailes en flèche, ayant une aile (12) comprenant des tronçons interne et externe (14, 16 respectivement) et un ensemble propulseur (29) suspendu sur la longueur de l'aile par un montant de support (20, 26, 46, 48) fixé à l'aile (12) et disposé suivant sa corde, le montant ayant une partie supérieure allongée dont les côtés remontent au-dessus de l'extrados de l'aile et dirigée vers l'arrière depuis le bord d'attaque (28) de l'aile avec une hauteur qui diminue au-dessus de l'aile vers une extrémité arrière, et un dispositif destiné à réduire un moment brutal et instable du tangage dû à la réduction de portance (20) du tronçon externe d'aile qui apparaît lors d'une augmentation de l'angle d'attaque (α) de l'aile au-dessus d'une valeur prédéterminée à une vitesse aérodynamique prédéterminée (V), caractérisé en ce que ledit dispositif comporte un carénage allongé (30) disposé suivant la corde sous forme d'une protubérance dépassant de l'extrados de l'aile à un emplacement disposé le long de la partie supérieure du montant et du côté interne (31) de ce montant, le carénage (30) ayant une configuration telle qu'il forme un choc dans le courant d'air s'écoulant sur l'extrados (24) du tronçon interne (14) de l'aile à ladite vitesse aérodynamique (V) et audit angle d'attaque (α), et compensant la perte de portance (20) du tronçon externe de l'aile, si bien que la variation instable du moment de tangage est réduite.

2. Aéronef à ailes en flèche selon la revendication 1, dans lequel la protubérance du carénage (30) est profilée afin qu'elle se raccorde à l'extrados de l'aile (12) et à la face adjacente de la partie supérieure du montant sur la longueur de leur raccord parallèle à la corde.

3. Aéronef à ailes en flèche selon l'une des revendications 1 et 2, dans lequel le carénage (30) dépasse en avant du bord d'attaque (28) de l'aile et est dirigé ensuite vers l'arrière jusqu'à une extrémité qui se trouve pratiquement à l'extrémité arrière de la partie supérieure du montant, la protubérance ayant un profil tel qu'elle forme un choc partant de l'intersection du bord d'attaque (28) de l'aile et du côté interne de la partie supérieure du montant.

4. Aéronef à ailes en flèche selon l'une des revendications 1 et 2, dans lequel le carénage (30) dépasse en avant du bord d'attaque (28) de l'aile et est dirigé vers l'arrière, vers une extrémité qui se trouve pratiquement à l'extrémité arrière de la partie supérieure du montant, la protubérance ayant un profil tel qu'elle forme un choc partant pratiquement du bord d'attaque (28) de l'aile à proximité du côté interne de la partie supérieure du montant, et en outre dans lequel la protubérance du carénage (30) remonte de l'extrados de l'aile jusqu'à un niveau supérieur à celui de la partie supérieure du montant afin qu'un guide générateur d'un tourbillon soit formé et réduise au minimum la traînée du carénage tout en réduisant au minimum la réduction du coefficient de portance de l'aile.

5. Aéronef à ailes en flèche selon la revendication 1, dans lequel la protubérance du carénage (30) a une forme de larme en plan, le plus grand rayon de la configuration de larme étant tourné vers le bord d'attaque de l'aile.

6. Aéronef à ailes en flèche selon la revendication 1, dans lequel la protubérance du carénage (30) est disposée entre 10 % et 40 % de la corde de l'aile.

*Fig.1.*

*Fig.2.*

PITCHING MOMENT COEFFICIENT  (−$C_M$)

1

Fig.3.

Fig.4.

*Fig.5.*

*Fig.6.*

_Fig. 7._

HORIZONTAL
STABILIZER
BUFFET
ENERGY

ANGLE OF ATTACK  α

_Fig. 8._

LEVEL OF
FLOW
SEPERATION

WITH POD

B

A

SIDE OF
BODY

NAC.

WING TIP

INBOARD
WING

OUTBOARD
WING

*Fig.9.*

50

42

30a

46

42

30a

30c

30b

48

30b

44

*Fig. 10.*